# EUROPEAN PATENT APPLICATION

(11) **EP 4 420 976 A1**
(43) Date of publication of application: **28.08.2024**
(21) Application number: 22888727.9
(22) Date of filing: 10.02.2022
(51) Int. Cl.: B64C 21/02, B64C 9/14

(54) **AIRCRAFT FLAP**

(30) Priority: 08.11.2021 CN 202111312116
(71) Applicant: Comac Beijing Aircraft Technology Research Institute, Beijing 102211 (CN); Commercial Aircraft Corporation Of China, Ltd., Shanghai 200131 (CN)
(72) Inventor: ZHANG, Yingzhe, Beijing 102211 (CN); BAI, Baohong, Beijing 102211 (CN); LIN, Dakai, Shanghai 200131 (CN)
(74) Representative: Gille Hrabal Partnerschaftsgesellschaft mbB Patentanwälte
(86) International application number: PCT/CN2022/075837
(87) International publication number: WO 2023/077686

(57) **Abstract**

The invention discloses an aircraft flap, which belongs to the field of aircraft high-lift systems and is used for reducing noise at a flap side edge and controlling aerodynamic loss. A main technical solution of the invention is as follows: An aircraft flap excluding an actuating structure for providing air jet includes at least one side edge opening, and the side edge opening is connected to one or more air passages for leading in/out airflows to reduce intensity of vortex structures of a flap side edge. The air passage runs through a first surface and a second surface of the flap, and forms a first side edge opening on the first surface and a second side edge opening on the second surface. One of the first surface and the second surface is a side surface of the flap. One of the first side edge opening and the second side edge opening is a side surface opening. The aircraft flap can reduce the aerodynamic loss while ensuring a noise reduction effect, and has simple structure and high practicability.

## Description

### FIELD OF TECHNOLOGY

The invention relates to the field of aircraft high-lift systems, and in particular to an aircraft flap with a noise reduction structure.

### BACKGROUND

The external noise level of large passenger aircrafts is the core index of "environmental friendliness" and an important evaluation criterion for airworthiness certification. The noise airworthiness regulations of the International Civil Aviation Organization stipulate the noise control criteria for aircrafts during approach and takeoff. Since December 2017, Europe and the United States have started to implement the noise airworthiness regulations Stage 5 for civil aircrafts, which require the cumulative noise margin to be further reduced by 7EPN dB based on Stage 4. This regulation is applicable to models applying for airworthiness certificates after December 31, 2017, which puts forward more stringent requirements for airworthiness certification of China's C919 large passenger aircraft and CR929 long-haul widebody aircraft. The external noise of an aircraft mainly comes from the engines and the airframe. The flap side edge is an important source of the noise of the aircraft fuselage, which belongs to a typical flow phonation problem. An aircraft flap mainly functions to improve the low-speed characteristics of the aircraft, improve the aerodynamic performance of the aircraft during takeoff and landing, and ensure the stability and safety of the aircraft during takeoff and landing. However, when the aircraft flap is deployed, strong aerodynamic noise radiation will be generated at the flap side edge, forming noise at the flap side edge.

The main mechanism of the noise at the flap side edge is as follows: since there is a great pressure difference between the upper and lower surfaces of the aircraft flap, high-intensity double-vortex structures are formed at the flap side edge. The instability of the double-vortex flow structures at the side edge and the interference and collision between the double-vortex structures and the solid wall of the flap induce strong unsteady surface fluctuating pressures. These strong surface fluctuating pressures will radiate noise outwards, which is mainly concentrated in the high-frequency range. In addition, the conventional flap side edges are mostly right-angled edges, which are prone to acoustic scattering with the double-vortex flow structures and also produce very strong radiated noise, which is mainly concentrated in the low-frequency range.

The main idea of flap side edge noise control is to weaken the vortex structures at the flap side edge and the interaction between the vortex structures and the wall surface. At present, there are mainly passive control technology and active control technology. The passive control technology reduces noise by changing and modifying the configuration of the side edge, including: (1) a porous material is added; (2) a fence (similar to the winglet at the wingtip) is mounted at the flap side edge: the fence at the flap side edge can increase the stability of the shear layer at the side edge, avoid mutual interference between the vortex structures at the side edge and the sharp side edge and delay the fusion of the vortex structures; and (3) the flap side edge is eliminated by a flexible material configuration continuous moldline method, so that the flap is smoothly connected with the main wing, thereby eliminating the shear vortex structures at the side edge, changing the discontinuity of spanwise lift at the flap side edge and fundamentally eliminating the noise at the flap side edge. The active control technology reduces the noise intensity by blowing high-speed airflows into the flow field at the side edge and blowing the vortices away from the wall surface, but this method has limited noise reduction effect and complex structure, and requires additional energy. At present, the flap side edge noise control technology is still not mature, which restricts the further reduction of the overall noise of large passenger aircrafts.

After a search of the prior art, the following technologies are found to be close to the solution provided by the invention:

Patent document 1: CN101454202A discloses a trailing edge flap for noise reduction. The midsection structure at the outer side edge of the trailing edge flap is cut to form a plurality of parts that do not communicate with each other so as to form air passages between the upper and lower surfaces of the flat, so that the noise at the flap side edge is reduced. In this solution, the opening area is large, and significant airflow separation will be generated in the air passages during cruising, which will lead to a high resistance.

Patent document 2: 2020116272656 discloses a trailing edge flap. According to this trailing edge flap, one or more air passages running through the upper and lower surfaces of the main body of the flap are formed at the midsection at the outer side edge of the main body of the flap. The air passage opens to the outside in the chord direction and is filled with a porous medium. However, the air passage running through the upper and lower surfaces will lead to huge aerodynamic loss. Moreover, during the actual use of the aircraft, the porous medium may block the air passages in the harsh flight environment, so that the air cannot pass through the air passages, which greatly lowers the control effect and increases the maintenance cost.

Therefore, there is a need for an aircraft flap, which can reduce the aerodynamic loss and the cruise resistance on the premise of reducing the aerodynamic noise at the flap side edge, and have simple structure.

### SUMMARY

The invention provides an aircraft flap to solve the problems of high aerodynamic loss, high cruise resistance, complex structure and the like in the prior art.

An embodiment of the invention provides an aircraft flap excluding an actuating structure for providing air jet. The aircraft flap includes at least one side edge opening, and the side edge opening is connected to one or more air passages for leading in/out airflows to reduce intensity of vortex structures of a flap side edge. The side edge includes a side margin of the flap and/or a part close to the side margin of the flap. The side margin of the flap includes an outer side margin of the flap and/or a part close to the outer side margin of the flap.

The air passage runs through a first surface and a second surface of the flap, and forms a first side edge opening on the first surface and a second side edge opening on the second surface; one of the first surface and the second surface is a side surface of the flap; and one of the first side edge opening and the second side edge opening is a side surface opening. Since the vortex structures of the flap side edge are mostly concentrated on the side surface of the flap, the side surface of the flap side edge is the main source of noise. The opening on the side surface can reduce the intensity of these vortex structures, which means that the opening on the side surface has better effect.

When the flap is in a working state, a pressure on the first surface is greater than a pressure on the second surface. The working state includes situations where lift needs to be increased, such as takeoff and landing. In terms of pressure distribution, the pressure on the first surface is greater than that on the second surface, and the air passage runs through the first surface and the second surface of the flap, so that the aerodynamic loss can be reduced while the noise is reduced, which has less effect on the lift.

A sectional area of the first side edge opening is greater than a sectional area of the second side edge opening. Since the pressure on the first surface is greater than that on the second surface, there is a pressure difference between the first surface and the second surface, so that the first side edge opening on the first surface forms an air intake groove and the second side edge opening on the second surface forms an air blow groove. The air intake groove is an air inlet through which air enters the air passage, and the air blow groove is an air outlet through which air flows out of the air passage. A sectional area of the air intake groove is greater than a sectional area of the air blow groove. The air intake groove can stabilize high-pressure airflow on the first surface, i.e., the high-pressure surface, and the air blow groove can generate obvious strong jet, which directly faces the core region of the vortex structures of the flap side edge. Therefore, the strong jet can better blow the vortex structures of the flap side edge away from the surface of the flap, weaken the interaction between the vortex structures of the flap side edge and the wall surface and effectively dissipate the vortex structures of the flap side edge.

A sectional area of one of the side surface openings accounts for more than 1% of a total area of the side surface of the flap.

A sum of sectional areas of the side surface openings accounts for 5% to 30% of a total area of the side surface of the flap.

A sum of sectional areas of the second side edge openings accounts for 5% to 20% of a sum of sectional areas of the first side edge openings, and the first side edge opening is the side surface opening.

A sum of sectional areas of the first side edge openings is 5 to 15 times a sum of sectional areas of the second side edge openings, and the second side edge opening is the side surface opening. The noise reduction effect mainly depends on the airflow velocity and flow rate in the air passage. Since the air passage connects the high-pressure region and the low-pressure region, the pressure difference between the two regions determines the airflow velocity in the air passage. The size of the air passage determines the flow rate. Therefore, the larger the size, the better the noise reduction effect. However, an excessive size will damage the flap structure.

The plurality of air passages do not communicate with each other.

The first side edge opening and the second side edge opening are different in shape.

The at least one side edge opening is located at a flap leading edge. The at least one side edge opening is located at a leading edge of an outer side edge of the flap. The flap leading edge includes a leading edge part of the flap side edge. The leading edge part of the flap side edge includes the leading edge of the outer side edge of the flap and/or a part close to the leading edge of the outer side edge of the flap. Providing the side edge opening at the leading edge of the flap side edge is based on the flow structure of the flap side edge. The vortex structures of the flap side edge are generated from the leading edge of the flap side edge, and then grow larger and stronger as they flow downstream. Therefore, only by controlling the source of the vortex structures can the flow structure of the flap side edge be controlled better, thereby better controlling the noise at the flap side edge.

The invention has the following beneficial effects:

The embodiments of the invention choose to provide the openings on the side surface of the flap because the side surface plays a very important role in the generation and development of the vortex structures of the flap side edge. The air passage does not run through the upper and lower surfaces of the flap, which can reduce the aerodynamic loss while reducing noise.

The embodiments of the invention do not need additional airflow control devices or airflow supply devices, so the structure is simple. During the takeoff or landing phase of the aircraft, the flap side edge is deployed, and the load on the flap side edge is relatively high. As a result, at this time, there is a great pressure difference between the two sides of the air passage, and the noise reduction effect of the air passage is better. During the cruise phase of the aircraft, the flap is retracted. At this time, the load on the flap side edge is relatively low, and there is a small pressure difference between the two sides of the air passage, so the cruise resistance is low.

According to the embodiments of the invention, there is no need to fill the air passages with a porous medium. This is because during the actual use of the aircraft, the porous medium may block the air passages in the harsh flight environment, so that the air cannot pass through the air passages, which greatly lowers the control effect and increases the maintenance cost. However, the structure of the air passages of the invention has less effect on the aerodynamic performance, i.e., lift and drag, so there is no need to fill the air passages with the porous medium.

According to the embodiments of the invention, the air passages can not only reduce the noise at the flap side edge, but also reduce the fluctuating pressure load on part of the wall surface of the flap side edge. An excessive pressure load on the wall surface will lead to flap buffeting, which will affect the safe flight of the aircraft and damage the flap structure in serious cases, so the invention can improve the safety of the aircraft.

### BRIEF DESCRIPTION OF THE DRAWINGS

To describe the technical solutions of the embodiments of the invention more clearly, the following briefly introduces the accompanying drawings required for describing the embodiments of the invention. Apparently, the accompanying drawings in the following description show only some embodiments of the invention, and a person of ordinary skill in the art may still derive other drawings from these accompanying drawings without creative work.
FIG. 1 is a schematic structural view of an upper surface and a side surface of an outer side edge of a flap according to Embodiment 1 of the invention;
FIG. 2 is a schematic structural view of a lower surface and the side surface of the outer side edge of the flap according to Embodiment 1 of the invention;
FIG. 3 is a schematic view of a cross-section of the outer side edge of the flap according to Embodiment 1 of the invention;
FIG. 4 is a schematic view of an outer side edge of the flap according to Embodiment 2 of the invention;
FIG. 5 shows structural views of a flap side edge according to Embodiment 3 of the invention and an ordinary flap side edge;
FIG. 6 shows fluctuating pressure root-mean-square cloud diagrams of the flap side edge according to Embodiment 3 of the invention and the ordinary flap side edge;
FIG. 7 shows average pressure distribution cloud diagrams of the flap side edge according to Embodiment 3 of the invention and the ordinary flap side edge; and
FIG. 8 shows noise spectra of the flap side edge according to Embodiment 3 of the invention and the ordinary flap side edge when observed directly below the flap side edge.

### DESCRIPTION OF THE EMBODIMENTS

The technical solutions in the embodiments of the invention will be described below clearly and completely with reference to the accompanying drawings in the embodiments of the invention. However, it should be understood that the embodiments disclosed herein are merely typical examples of the invention, which can be embodied in various forms. Therefore, the specific details disclosed herein are not to be regarded as limiting, but merely as a basis for the claims and as a representative basis for teaching those skilled in the art to variously apply the invention in any appropriate manner in practice, including by adopting various features disclosed herein and features that may not be disclosed herein. All other embodiments obtained by those of ordinary skill in the art based on the embodiments in the invention without creative work are within the protection scope of the invention.

It should be noted that directional signs used herein to reveal the structure and actions of various parts of the disclosed implementations, such as upper surface, lower surface, inward, outward, etc., are not absolute, but relative. These signs are appropriate when the various parts of the disclosed implementations are located in the positions shown in the drawings. If the position or reference frame of the disclosed implementations changes, these signs will also change accordingly.

The structure of the aircraft flap provided by the embodiments of the invention will be described below with reference to the accompanying drawings. The same reference signs are used to denote the same parts.

An embodiment of the invention provides an aircraft flap, including: a deployable flap 10. The flap 10 has an upper surface 13, a side surface 11, a lower surface 15, and at least one side edge openings located near an outer side edge of the flap. The side edge opening is connected to an air passage. The air passage runs through a first surface and a second surface of the flap. A pressure on the first surface is greater than a pressure on the second surface.

### Embodiment 1

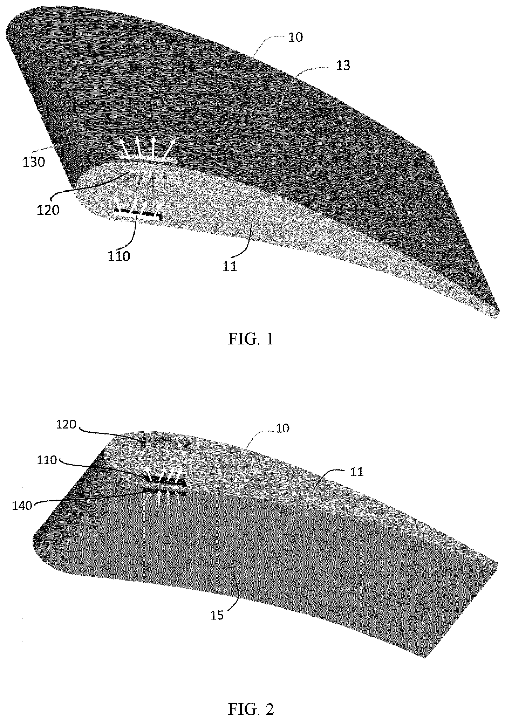

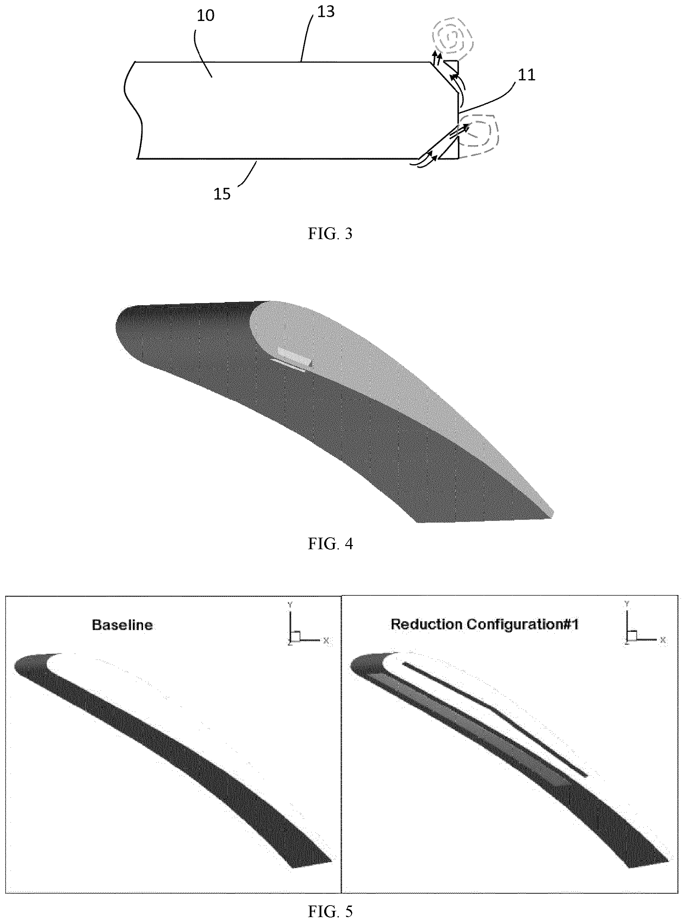

A specific embodiment of the invention provides an aircraft flap. FIG. 1 and FIG. 2 are schematic views of the outer side edge of the flap of this specific embodiment. In this embodiment of the invention, the air passage is connected to the first surface and the second surface, the pressure on the first surface is greater than the pressure on the second surface, and it is known that the pressure on the lower surface of the flap>the pressure on the side surface of the flap>the pressure on the upper surface of the flap, so the air passage of this embodiment is connected to the lower surface and the side surface of the flap or connected to the side surface and the upper surface of the flap. In this preferred embodiment, there are two air passages. One air passage is connected to the upper surface 13 and the side surface 11 of the flap, and forms an air blow groove 130, i.e., a second side edge opening connected to the air passage, on the upper surface 13 of the flap, and an air intake groove 120, i.e., a first side edge opening connected to the air passage, on the side surface 11 of the flap. The other air passage is connected to the lower surface 15 and the side surface 11 of the flap, and forms an air intake groove 140, i.e., a first side edge opening connected to the air passage, on the lower surface 15 of the flap, and an air blow groove 110, i.e., a second side edge opening of the air passage, on the side surface 11 of the flap. The first side edge openings and/or the second side edge openings on the side surface, the upper surface and the lower surface are square in shape. The cross-section of the outer side edge of the flap of this embodiment is shown in FIG. 3. The air intake groove 140 on the lower surface 15 and the air intake groove 120 on the side surface 11 of the flap can stabilize the high-pressure airflows on the lower surface 15 and the side surface 11 of the flap and reduce the intensity of the vortex structures of the flap side edge. In addition, strong jet will be formed at the air blow groove 130 on the upper surface 13 and the air blow groove 110 on the side surface 11 of the flap. The strong jet can enhance the dissipation of the vortex structures of the flap side edge, blow the vortex structures of the flap side edge away from the surface of the flap side edge and weaken the interaction between the vortex structures of the flap side edge and the surface of the flap side edge, thereby finally reducing the noise at the flap side edge.

### Embodiment 2

A specific embodiment of the invention provides an aircraft flap. FIG. 4 is a schematic view of the outer side edge of the flap according to this specific embodiment. In this embodiment, there is one air passage running through the side surface and the lower surface of the flap, and the side edge openings on the side surface and the lower surface are square in shape.

### Embodiment 3

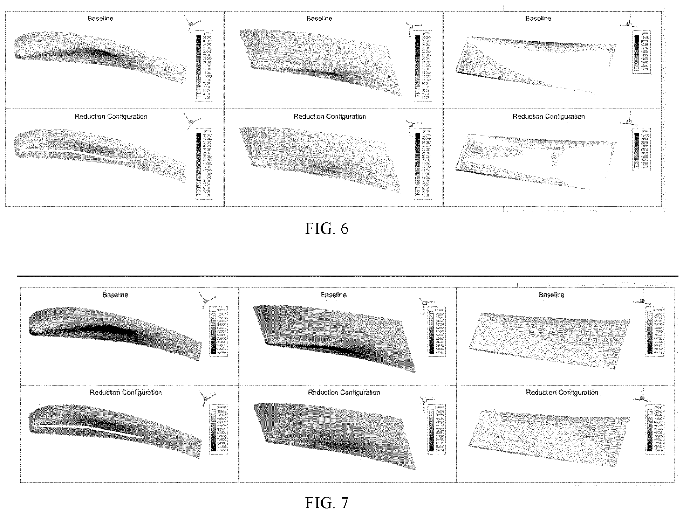

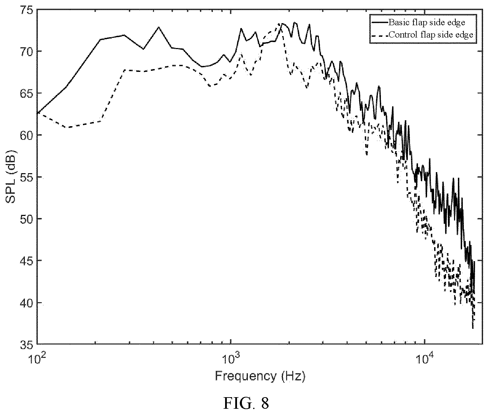

A specific embodiment of the invention provides an aircraft flap. In this embodiment, there is one air passage connected to a high-pressure surface and a low-pressure surface. In this embodiment, the air passage is connected to the lower surface and the side surface of the flap. The second side edge opening on the side surface that is connected to the air passage is elongated in shape, and the first side edge opening on the lower surface is rectangular in shape. FIG. 5 shows geometric shape views of an ordinary flap side edge and the flap side edge of Embodiment 3. The noise reduction effect of the flap of Embodiment 3 is evaluated by numerical simulation. FIG. 6 shows fluctuating pressure root-mean-square cloud diagrams of the ordinary flap side edge and the flap side edge of Embodiment 3. FIG. 7 shows average pressure distribution cloud diagrams of the ordinary flap side edge and the flap side edge of Embodiment 3. As can be seen from FIG. 6 and FIG. 7, the air passage connected to the lower surface and the side surface of the flap side edge significantly changes the fluctuating pressure distribution on the surface of the flap, and the fluctuating pressure of the flap side edge of Embodiment 3 is significantly suppressed, which can not only reduce the load of the flap side edge, but also reduce the noise radiated by the flap side edge. Moreover, the air passage also reduces the pressure amplitude on the trailing edge of the flap side edge. As a result, the far-field noise at the flap side edge is reduced. FIG. 8 shows noise spectra of the ordinary flap side edge and the flap side edge of Embodiment 3 when observed directly below the flap side edge. As can be seen, the flap side edge of Embodiment 3 significantly reduces the noise at the flap side edge. Especially in the low frequency range, the noise is reduced by about 5 dB.

The invention does not limit the number of the air passages. However, excessive air passages will affect the flap structure. Therefore, in the embodiments provided by the invention, the number of the air passages is more than 1 and less than 4, preferably 2. The side edge openings on the side surface or the upper surface or the lower surface may be arbitrary in shape, including square, circular and elongated. A sectional area of one of the side surface openings accounts for more than 1% of a total area of the side surface of the flap. A sum of sectional areas of the side surface openings accounts for 5% to 30% of a total area of the side surface of the flap. A sum of sectional areas of the second side edge openings accounts for 5% to 20% of a sum of sectional areas of the first side edge openings, and the first side edge opening is the side surface opening. A sum of sectional areas of the first side edge openings is 5 to 15 times a sum of sectional areas of the second side edge openings, and the second side edge opening is the side surface opening.

The technical contents and technical characteristics of the invention have been disclosed above, and the above embodiments are intended merely to illustrate, but not to limit the technical solutions of the invention. However, it can be understood that under the creative idea of the invention; those skilled in the art can make various changes and improvements to the above structures and shapes, including the combination of the technical features disclosed or claimed separately here and obviously including other combinations of these features, or equivalent substitutions on some technical features. These modifications or substitutions do not make the essence of the corresponding technical solutions deviate from the spirit and scope of the technical solutions of the embodiments of the invention, and should be included in the protection scope of the invention. It should be note that, by convention, the use of a single element in the claims is intend to include one or more such elements. In addition, any reference signs in the claims should not be constructed to limit the scope of the invention.

## Claims

1. An aircraft flap excluding an actuating structure for providing air jet, **characterized in that** the aircraft flap comprises at least one side edge opening, and the side edge opening is connected to one or more air passages for leading in/out airflows to reduce intensity of vortex structures of a flap side edge.

2. The aircraft flap according to claim 1, **characterized in that** the air passage runs through a first surface and a second surface of the flap, and forms a first side edge opening on the first surface and a second side edge opening on the second surface;
one of the first surface and the second surface is a side surface of the flap; and
one of the first side edge opening and the second side edge opening is a side surface opening.

3. The aircraft flap according to claim 2, **characterized in that** when the flap is in a working state, a pressure on the first surface is greater than a pressure on the second surface.

4. The aircraft flap according to claim 2 or 3, **characterized in that** a sectional area of the first side edge opening is greater than a sectional area of the second side edge opening.

5. The aircraft flap according to claim 2, **characterized in that** a sectional area of one of the side surface openings accounts for more than 1% of a total area of the side surface of the flap.

6. The aircraft flap according to claim 2, **characterized in that** a sum of sectional areas of the side surface openings accounts for 5% to 30% of a total area of the side surface of the flap.

7. The aircraft flap according to claim 2, **characterized in that** a sum of sectional areas of the second side edge openings accounts for 5% to 20% of a sum of sectional areas of the first side edge openings, and the first side edge opening is the side surface opening.

8. The aircraft flap according to claim 2, **characterized in that** a sum of sectional areas of the first side edge openings is 5 to 15 times a sum of sectional areas of the second side edge openings, and the second side edge opening is the side surface opening.

9. The aircraft flap according to claim 2, **characterized in that** the first side edge opening and the second side edge opening are different in shape.

10. The aircraft flap according to claim 1, **characterized in that** the at least one side edge opening is located at a flap leading edge.
